# EUROPÄISCHE PATENTSCHRIFT

(11) **EP 0 887 135 B1**
(45) Veröffentlichungstag und Bekanntmachung des Hinweises auf die Patenterteilung: **05.01.2000**
(21) Anmeldenummer: 98108226.6
(22) Anmeldetag: 06.05.1998
(51) Int. Cl.: B23B 31/08

(54) **Gewindeschneidfutter für rigid tapping**
Chuck for rigid tapping
Mandrin de serrage pour rigid tapping

(30) Priorität: 19.06.1997 DE 19725950
(43) Veröffentlichungstag der Anmeldung: 30.12.1998
(73) Patentinhaber: Emuge-Werk Richard Glimpel Fabrik für Präzisionswerkzeuge (vormals Moschkau & Glimpel), D-91207 Lauf (DE)
(72) Erfinder: Glimpel, Helmut, 91207 Lauf (DE); Watzke, Rüdiger, 91233 Speikern/Neunkirchen (DE)
(74) Vertreter: Matschkur, Lindner Blaumeier Patent- und Rechtsanwälte

(56) Entgegenhaltungen:
- EP-A- 0 360 947
- US-A- 4 385 854

## Beschreibung

Die Erfindung bezieht sich auf ein Gewindeschneidfutter für die CNC-Maschinentechnologie 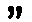 rigid tapping", mit einem in einem Futterschaft gehalterten Spannmittel, insbesondere einer Spannzange, für den Gewindebohrer.

Beim 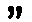 rigid tapping" handelt es sich um NC-Maschinen, bei denen der Maschinenhersteller die 100% genaue Synchronisierung der Maschinenspindeldrehbewegung zur linearen Vorschubeinheitsbewegung als Funktion der Gewindesteigung des eingesetzten Gewindebohrers verspricht.

Unabhängig davon, daß bei diesem Prozeß die Rechnergeschwindigkeit oftmals die mögliche Gewindeschneidzykluszeit limitiert, zeigt die Praxis, daß bei dem sog. 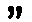 ripid tapping" auf die eingesetzten starr gespannten Gewindebohrer nach der Drehrichtungsumkehr, also beim Herausdrehen des Gewindebohrers, hohe Axialkräfte ohne erkennbare Gesetzmäßigkeit in Zug- ode Druckrichtung auf den Gewindebohrer wirken. Diese Kräfte bewirken einen erhöhten Wekzeugverschleiß und mindern die Oberflächengüte der geschnittenen Gewinde.

Diese angesprochenen störenden Kräfte lassen sich wie folgt erklären: Der Rechner der Maschinensteuerung synchronisiert beim Gewindeschneidprozeß eine Maschinenlinearbewegung mit einer Maschinendrehbewegung. Die Positionsinformation der jeweiligen Bewegung erhält der Rechner über elektrische Impulsgeber, die mit der Bewegungsmechanik verbunden sind. Je nach der Auflösungsgüte des Impulsgebers entsteht beim Reversieren des Gewindebohrers ein nicht vermeidbarer Stellungsfehler (ähnlich dem Zahnflankenspieleinfluß bei mechanischen Steuerungen) zwischen der Vorschubeinheit und der Werkstückspindel. Der noch im Werkstück eingedrehte Gewindebohrer wird zum Zug- oder Druckstab, wobei die auftretenden Kräfte wegen des E-Moduls des Gewindebohrerwerkstoffs einen steil ansteigenden Verlauf zeigen.

Der Erfindung liegt daher die Aufgabe zugrunde, ein Gewindeschneidfutter für die CNC-Maschinentechnologie 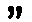 rigid tapping" zu schaffen, welches die genannten Axialkräfte beim Reversieren des Gewindebohrers vermeidet oder zumindest stark abschwächt, so daß die Oberflächengüte der geschnittenen Gewinde verbessert ist und nur ein geringer Werkzeugverschleiß stattfindet.

Zur Lösung dieser Aufgabe ist es bei einem Gewindeschneidfutter der eingangs genannten Art erfindungsgemäß vorgesehen, daß dem Spannmittel - der Einfachheit halber ist im folgenden nur noch von der bevorzugten Spannzange die Rede, obgleich auch andere Spannmittel, wie beispielsweise ein Schnellwechseleinsatz, verwendet werden können - und dem Futterschaft ein Aufnahmeteil zwischengeordnet ist, das in Drehrichtung spielfrei im Futterschaft gehaltert ist und in axialer Richtung in Zug- und Druckrichtung ein geringes, über Elastomerverbindungen abgefedertes, axiales Spiel aufweist.

Hierzu kann in Weiterbildung der Erfindung vorgesehen sein, daß radial über das Aufnahmeteil überstehende Drehmomentmitnahmekörper mit geringem axialen Spiel in, vorzugsweise von einer Abdeckhülse überdeckte, Bohrungen des Futterschaftes eingreifen.

Die auf diese Art und Weise vorgesehene geringe Axialbewegung in Zug-und Druckrichtung wird in weiterer Ausgestaltung der Erfindung durch eine Bohrung des Futterschaftes und erweiterte Anschlußbohrungen des Aufnahmeteils ausfüllende Elastomerverbindungen abgefedert. Diese Elastomerverbindungen lassen sich sehr einfach herstellen, indem über die Bohrungen des Futterschaftes das Elastomermaterial eingespritzt wird, das dann in der späteren Arbeitsposition zum Elastomerverbindungsteil aushärtet.

Als ganz besonders zweckmäßig hat sich eine Ausgestaltung eines erfindungsgemäßen Schneidfutters erwiesen, bei welchem zur Abfederung des geringen axialen Spiels in das Aufnahmeteil spielfrei eingreifende, radial überstehende Stifte mit aufgesteckten, spielfrei in Bohrungen des Futterschaftes einragenden Elastomerringen vorgesehen sind. Diese Ausgestaltung läßt sich nämlich wesentlich einfacher herstellen als die durchgehend als Elastomerverbindungen ausgebildeten Federelemente, die in die Bohrungen eingespritzt werden müssen.

Darüber hinaus hat diese bevorzugte Ausbildung der Abfederung noch den Vorteil, daß die Elastomerringe quer zur Längsachse des Futters geteilt und jeweils aus Materialien mit unterschiedlicher Federcharakteristik ausgebildet sein können. Dadurch läßt sich eine unterschiedliche Kraftaufteilung in Zug- und Druckrichtung erzielen, um die genannten Axialkräfte beim Reversieren des Gewindebohrers durch ein geringfügiges Nachgeben, meist nur im Bereich von einigen Zehntelmillimetern, zu vermeiden oder so stark abzuschwächen, daß die Oberflächengüte der geschnittenen Gewinde deutlich verbessert ist und auch nur ein geringerer Werkzeugverschleiß stattfindet.

Schließlich liegt es auch noch im Rahmen der Erfindung, das Aufnahmeteil über einen Gummiring am Boden des Futterschafts abzustützen.

Weitere Vorteile, Merkmale und Einzelheiten eines Ausführungsbeispiels der Erfindung ergeben sich aus der nachfolgenden Beschreibung sowie anhand der Zeichnung. Dabei zeigen:
- Fig. 1: einen Längsschnitt durch ein erfindungsgemäßes Gewindeschneidfutter,
- Fig. 2: einen Schnitt längs der Linie A-A in Fig. 1,
- Fig. 3: eine Vergrößerung des Ausschnitts X in Fig. 1, und
- Fig. 4: einen der Fig. 1 entsprechenden Schnitt durch ein abgewandeltes Gewindeschneidfutter.

Die Spannzange 1, in der der Gewindebohrer 2 mit Hilfe der Spannmutter 3 befestigt ist, ist erfindungsgemäß nicht unmittelbar im Futterschaft 4 befestigt, sondern unter Zwischenordnung eines Aufnahmeteils 6. Die Drehmomentmitnahme zwischen dem Futterschaft 4 und dem Aufnahmeteil 6 erfolgt spielfrei über Drehmomentmitnehmer 7. Diese Drehmomentmitnehmer, die mit erweiterten Köpfen 8 radial über das Aufnahmeteil überstehen, greifen in einem geringen axialen Spiel in Querbohrungen 9 des Futterschaftes ein. Diese Querbohrungen 9 werden durch eine Hülse 10 überdeckt, die auch die zur elastischen Abfederung des geringen mechanischen Axialspiels dienende Elastomerverbindungen 11 überdeckt. Diese Elastomerverbindungen 11 werden dadurch gebildet, daß in Bohrungen 12 des Futterschaftes und dazu koaxiale erweiterte Sackbohrungen 13 des Aufnahmeteils 6 eine plastische Elastomerverbindung eingespritzt wird, die dann im Werkstück aushärtet. Das Aufnahmeteil 6 stützt sich über einen Gummiring 14 am Boden 15 des Spannfutters 4 ab.

Durch diese Konstruktion ist das Gewindeschneidfutter starr genug, so daß der Gewindeschneidprozeß als starr angesehen werden kann - wie es für das 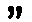 rigid tapping" notwendig ist - die Werkzeugspannung ist jedoch elastisch. Auftretende Synchronisationsfehler, bedingt durch die Eigenschaften und Toleranzen der Rotations-Impulsgeber und der Linear-Impulsgeber der CNC-Maschine erzeugen somit keine hohen Werkzeugaxialkräfte in Abhängigkeit des E-Moduls des Gewindebohrerwerkstoffstahls, sondern nur in Abhängigkeit des E-Moduls des Elastomers, also in der Regel wesentlich geringere werkzeugverschleißende Axialkräfte.

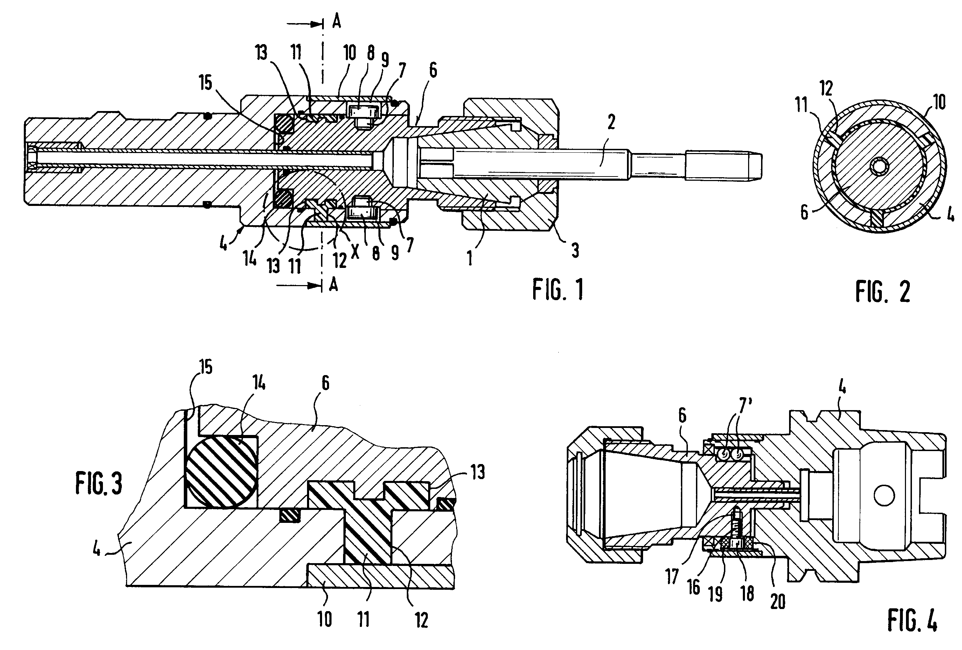

Das Ausführungsbeispiel nach Fig. 4 unterscheidet sich von dem nach den Figuren 1 bis 3 im wesentlichen dadurch, daß anstelle der als Stifte mit erweiterten Köpfen ausgebildeten Drehmomentmitnehmer Mitnahmekugeln 7' vorgesehen sind, die in an sich bekannter Weise in Drehrichtung spielfrei den Futterschaft 4 mit dem Aufnahmeteil 6 verbinden. Der Hauptunterschied besteht aber in der anderen Ausbildung der Abfederung des geringen, nur einige Zehntelmillimeter betragenden axialen Spiels. Hierfür dienen bei der Ausführungsform nach Fig. 4 Stifte 16, die spielfrei in Bohrungen 17 des Aufnahmeteils 6 eingesetzt sind und mit vorzugsweise etwas erweiterten Köpfen 18 über das Aufnahmeteil 6 radial überstehen. Auf die Köpfe 18 sind aus Gummi oder Kunststoff bestehende Elastomerringe 19 spielfrei aufgesteckt, die ihrerseits wiederum spielfrei in Bohrungen 20 des Futterschaftes 4 einragen. Diese Art der Abfederung läßt sich sehr viel einfacher herstellen als die durch Einspritzen zu bildende Elastomerverbindung, wie sie in den Figuren 1 bis 3 gezeigt ist. Darüber hinaus hat man bei dieser Ausbildung den großen Vorteil, daß man den Elastomerring 19 quer zur Längsachse des Futters geteilt aus zwei Hälften zusammensetzen kann, die jeweils aus unterschiedlichen Materialien bestehen, so daß die Federcharakteristik in Zug- und in Druckrichtung des Gewindeschneidfutters unterschiedlich ausgestaltet sein kann.

## Patentansprüche

1. Gewindeschneidfutter für CNC-Maschinentechnologie 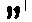 rigid tapping", mit einem in einem Futterschaft gehalterten Spannmittel, insbesondere einer Spannzange, für den Gewindebohrer, dadurch gekennzeichnet, daß dem Spannmittel (1) und dem Futterschaft (4) ein Aufnahmeteil (6) zwischengeordnet ist, das in Drehrichtung spielfrei im Futterschaft (4) gehaltert ist und in axialer Richtung in Zug- und Druckrichtung ein geringes, über Elastomerverbindungen abgefedertes, axiales Spiel aufweist.

2. Gewindeschneidfutter nach Anspruch 1, dadurch gekennzeichnet, daß radial über das Aufnahmeteil (6) überstehende Drehmomentmitnahmekörper (7) mit geringem axialem Spiel in, vorzugsweise von einer Abdeckhülse (10) überdeckte, Bohrungen (9) des Futterschaftes (4) eingreifen.

3. Gewindeschneidfutter nach Anspruch 1 oder 2, dadurch gekennzeichnet, daß zur Abfederung Bohrungen (12) des Futterschaftes (4) und erweiterte Anschlußsackbohrungen (13) des Aufnahmeteils ausfüllende Elastomerverbindungen (11) vorgesehen sind.

4. Gewindeschneidfutter nach einem der Ansprüche 1 bis 3, dadurch gekennzeichnet, daß das Aufnahmeteil (6) sich über einen Gummiring (14) am Boden (15) des Futterschaftes (4) abstützt.

5. Gewindeschneidfutter nach einem der Ansprüche 1 bis 3, dadurch gekennzeichnet, daß zur Abfederung des geringen axialen Spiels in das Aufnahmeteil spielfrei eingreifende, radial überstehende Stifte mit aufgesteckten, spielfrei in Bohrungen des Futterschaftes einragenden Elastomerringen vorgesehen sind.

6. Gewindeschneidfutter nach Anspruch 5, dadurch gekennzeichnet, daß die Elastomerringe quer zur Längsachse des Futters geteilt und jeweils aus Materialien mit unterschiedlicher Federcharakteristik bestehen.

## Claims

1. Threaded blade chuck for CNC machine technology "rigid tapping", having a clamping means held in a chuck shaft, in particular a collet chuck, for the threaded drill, characterised in that a receiving part (6) is interposed between the clamping means (1) and the chuck shaft (4) and is held without play in the direction of rotation in the chuck shaft (4) and has in the axial direction in the traction and pressure direction slight axial play which is sprung via elastomer connections.

2. Threaded blade chuck according to claim 1, characterised in that torque driver bodies projecting radially beyond the receiving part (6) engage with slight axial play in bores (9) covered preferably by a covering sleeve (10).

3. Threaded blade chuck according to claim 1 or 2, characterised in that, for springing, bores (12) in the chuck shaft (4) and widened connecting blind bores (13) in the receiving part which fill elastomer connections (11) are provided.

4. Threaded blade chuck according to one of claims 1 to 3, characterised in that the receiving part (6) bears via a rubber ring (14) on the base (15) of the chuck shaft (4).

5. Threaded blade chuck according to one of claims 1 to 3, characterised in that for springing of the slight axial play radially projecting pins engaging without play in the receiving part and having elastomer rings mounted thereon projecting without play in bores of the chuck shaft are provided.

6. Threaded blade chuck according to claim 5, characterised in that the elastomer rings are divided transverse to the longitudinal axis of the chuck and each consist of a material a with different resilient characteristics.

## Revendications

1. Mandrin de coupe pour taraudage destiné à la technologie de machine-outil à commande numérique par calculateur, dite de "rigid tapping", c'est à dire le taraudage rigide, comprenant un moyen de serrage supporté dans un corps de mandrin, notamment une pince de serrage, pour le taraud, **caractérisé** en ce qu'entre le moyen de serrage (1) et le corps de mandrin (4) est interposée une pièce de réception (6), qui, dans le sens de la rotation, est maintenue sans jeu dans le corps de mandrin (4), et présente, dans la direction axiale, dans le sens de la traction et de la compression, un léger jeu axial rendu élastique par des liaisons en élastomère.

2. Mandrin de coupe pour taraudage selon la revendication 1, **caractérisé** en ce que des corps d'entraînement de transmission du couple (7) faisant saillie radialement de la pièce de réception (6), s'engagent, avec un léger jeu axial, dans des perçages (9) du corps de mandrin (4), de préférence recouverts par une douille de recouvrement (10).

3. Mandrin de coupe pour taraudage selon la revendication 1 ou 2, **caractérisé** en ce que pour réaliser l'élasticité, on prévoit des liaisons en élastomère (11) remplissant des perçages (12) du corps de mandrin (4) et des perçages borgnes de jonction (13), élargis, de la pièce de réception.

4. Mandrin de coupe pour taraudage selon l'une des revendications 1 à 3, **caractérisé** en ce que la pièce de réception (6) s'appuie sur le fond (15) du corps de mandrin (4), par l'intermédiaire d'un anneau de caoutchouc (14).

5. Mandrin de coupe pour taraudage selon l'une des revendications 1 à 3, **caractérisé** en ce que pour réaliser l'élasticité du léger jeu axial, on prévoit des broches en saillie radiale, s'engageant sans jeu dans la pièce de réception, sur lesquelles sont emmanchés des anneaux d'élastomère pénétrant sans jeu dans des perçages du corps de mandrin.

6. Mandrin de coupe pour taraudage selon la revendication 5, **caractérisé** en ce que les anneaux d'élastomère sont divisés transversalement à l'axe longitudinal du mandrin et sont constitués respectivement de matériaux à caractéristique d'élasticité différente.
